# EUROPEAN PATENT APPLICATION

(11) **EP 3 246 173 A1**
(43) Date of publication of application: **22.11.2017**
(21) Application number: 17171388.6
(22) Date of filing: 16.05.2017
(51) Int. Cl.: B43L 1/00, B05D 5/08, C09D 1/02, C09D 1/04

(54) **ONE-PART WATERBORNE/WATER-BASED DRY ERASE PAINT AND ANTI-GRAFFITI PAINT**

(30) Priority: 16.05.2016 US 201662337144 P
(71) Applicant: Heiman, Michael, Lee's Summit, MO 64063 (US)
(72) Inventor: Heiman, Michael, Lee's Summit, MO 64063 (US)
(74) Representative: FRKelly

(57) **Abstract**

The present disclosure relates to one-pot, water-based/waterborne dry erasable paints, anti-graffiti paints, and surfaces. The dry erasable paints can be used to create dry erase coatings on virtually any type of substrate surface. The paints comprise an Si-containing compound, water, and an ingredient selected from the group consisting of binders, acids, salts, surfactants, and glycerin, and create a dry surface where the flexibility, adhesion, dye resistance, and chemical resistance best matches the substrate and use.

## Description

### BACKGROUND OF THE INVENTION

### Related Application

The present application claims the priority benefit of U.S. Provisional Patent Application Serial No. 62/337,144, filed May 16, 2016, entitled ONE-PART WATERBORNE / WATER-BASED DRY ERASE PAINT AND ANTI-GRAFFITI PAINT, incorporated by reference in its entirety herein.

### Field of the Invention

The present disclosure relates to one-pot, dry erasable paints and surfaces.

### Description of Related Art

There are few easy-to-use dry erase paints currently available. Some available products contain photoinitiators, which requires UV curing to create the final markable-erasable surface. Others require heat to create the surface. Other available products are multi-part systems (typically epoxy-based) that require combining two components immediately prior to the time of application. These epoxy-based products have a limited pot life. Furthermore, the epoxy-based products are typically only available in certain colors, non-tintable by the end-user, and/or require sanding and/or the use of a primer before applying to a substrate. In addition, the cure time for many of these products is 48 to 150+ hours. Many such products utilize undesirable solvents that can be dangerous and/or environmentally unfriendly.

Thus, there remains a need in the art for improved dry erase paint products. The product should contain all of the varied favorable attributes in one product: one-component; tint-able with existing common tinting that is readily available in most paint centers or craft centers; capable of being directly applied to existing surfaces without sanding or primers; extended shelf life; friendly (low Hazardous Materials Identification System rating - 0, 1, AND/OR 2) waterborne / water based; low or zero V.O.C.; short cure/use times; ease of clean-up and reuse of applicator tools; allow the use of all types of markers (dry erase, permanent, and regular) and other marking devices including paints; deep cleans and periodically cleans with plain tap water; non-visibly repairable and amendable; and suitable for both indoor and outdoor installation and use. The present invention fills the foregoing need.

### SUMMARY OF THE INVENTION

The present invention is broadly concerned with dry erasable paints, methods of using those paints to create dry erasable surfaces, and the resulting dry erasable surfaces. The methods comprise providing a one-pot, dry erase paint comprising an Si-containing compound, water, and an ingredient selected from the group consisting of binders, acids, salts, surfactants, and glycerin. That paint is used to form a coating adjacent a substrate surface. The coating is allowed to dry under ambient conditions, yielding a dried coating having a markable-erasable surface.

In another embodiment, the invention provides a dry erasable structure comprising a substrate having a surface and a dry erasable coating adjacent the substrate surface. The dry erasable coating is formed from a dry erase paint comprising an Si-containing compound, water, and an ingredient selected from the group consisting of binders, acids, salts, surfactants, and glycerin.

In yet a further embodiment, the invention is concerned with a one-pot, dry erase paint comprising an Si-containing compound, water, and an ingredient selected from the group consisting of binders, acids, salts, surfactants, and glycerin, wherein said paint has a one-pot shelf life of at least about 365 days.

### BRIEF DESCRIPTION OF THE DRAWING FIGURES

The patent or application file contains at least one drawing executed in color. Copies of this patent or patent application publication with color drawing(s) will be provided by the Office upon request and payment of the necessary fee.
Figure (Fig.) 1 is a photograph showing the markability of a coating prepared from Formulation I of Example 1;
Fig. 2 is a photograph showing the erasability by a felt eraser of the markings made in Fig. 1;
Fig. 3 is a photograph showing the aqueous removability of the markings made in Fig. 1;
Fig. 4 is a close-up photograph showing the protective qualities of the coating made in Fig. 1;
Fig. 5 is a photograph showing that the coating prepared in Fig. 1 can be subjected to further marking after the marking removal demonstrated in Figs. 2 and 3; and
Fig. 6 is a photograph showing that the subsequent marking of Fig. 5 can still be erased with a felt eraser.

### DETAILED DESCRIPTION OF THE PREFERRED EMBODIMENTS

The present disclosure is concerned with dry erase (i.e., "markable-erasable") coatings, coated substrates, dry erase surfaces, and compositions to produce the same. The inventive compositions are one-part ("one-pot"), dry erase paints that do not require any special curing techniques, such as photoinitiated (e.g., UV) or heat curing. The inventive compositions are "one-part" or "one-pot," which means all ingredients or components of the composition are mixable in a single container without reacting such that the composition has an extended shelf life even when mixed together, and thus can be provided to the end-user as a one component composition in a single container. This is contrasted with conventional two-part (or multi-part) compositions which have "A" and "B" (and sometimes "C") elements provided in separate containers, and must be mixed on-site within specific ratio constraints, and used within a defined (typically short, i.e., less than 4 hour) period of time after mixing, since mixing the separate elements initiates the curing reaction. Thus, the inventive one-part compositions have the added benefit of being pre-mixed and ready-to-use for the end user, and do not have to be combined on-site, but can simply be applied to the desired substrate to form the dry erase surface. The user simply opens the container and applies the product.

The inventive compositions are waterborne / water-based products that are more user friendly and uses a variety of admix items, which are preferably benign. In one embodiment, all of the components are either found in kitchen food or in common household cleaning items. The applied product cures in ambient condition within about an hour and preferably within about 3 minutes. In one embodiment, a variety of marking instruments, including permanent marker (such as the one sold under the name Sharpie®), are cleanly removed via dry erasing without the use of wet cleaning products. If wet cleaning is desired, water will remove permanent marker, dried-on dry erase markings that become too hard for a dry erase eraser, defective markers, and residue that creates the shadow (ghosting) that often results from using "dirty" erasers. When items such as dirt and food residue get on the surface, other wet cleaners like Windex® brand and Formula 409® brand products, isopropyl alcohol, standard dry erase surface cleaners, other cleaners and solvents, and/or dry cleaners like sponges and cloths can be used to remove these items without affecting the performance of the dry erase surface. Advantageously, the present invention can be utilized in both indoor environments and outdoor environments.

In more detail, the dry erasable paint compositions comprise a base component disperse or dissolved in an admix component. The base component comprises a silicate-based composition, with a high solids (preferably about 40% by weight) in a water solvent, preferably formulated for abrasion resistance, chemical resistance, stain resistance, UV-stability, and longevity, and having sufficient flexibility so the surface will not crack.

In some embodiments, the performance is achieved with additions of salt, sugar, surfactants, humectants, hygroscopes, moisture retainers, binders, glues, thickeners, defoamers, acids (e.g., acrylic acid, hydrofluoric acid, H₂SO₄, HCl, acetic acid, citric acid, amino acids), sodium acid pyrophosphate, CO₂, minerals, metal ions, oil, plasticizers, glycols, olefins, phosphates, glucosides, asphaltenes, esters, their components, and combinations of the foregoing. The amount of solids content and the percentage of the solvent is based on the silicate utilized, the substrate to which it will be applied, and the manner of application (e.g., roller, forced spray). For example, in a roller application situation, the composition may need to be thicker than a spray applicator, while a rough substrate texture like bare concrete may require a mixture with greater sheeting and penetrating attributes than a smoother painted substrate.

Additions to the base can be products friendly to humans, including: tap water; table salt (NaCl), which can be added as a water mixture to aid in quickness of production; sugar also in a water mixture to aid in quickness of production; oils like coconut oil in solid or liquid formats, which aids in making the silicate surface more supple and flexible; propylparaben; glycerin; surfactants (including soap products such as DAWN® liquid dish soap, cetyltrimethylammonium bromide, tetradecyltrimethylammonium bromide, dodecyltrimethylammonium bromide (DTAB) and sodium dodecyl sulfate), to aid in wetting, structure, and adhesion; acids found in food items like lemon juice, paint, CO₂, thickeners and binder components such as gum Arabic. Furthermore, a wide range of colors can be produced with food-approved colorants and typical colorants as found in retail paint centers like those added to regular latex paint and dyes used with textile products like those found in hobby/craft/cleaning sections.

If the base component(s) is in liquid or gel form, the composition can be prepared by simply mixing the water admix and any other ingredients into the base component until a homogenous composition is formed. If the base component(s) is in a solid or semisolid form, the base component(s) can be combined with water (H₂O) or tap water followed by mixing in the admix and any other additives until substantially blended together in a homogenous composition. In some aspects, the sodium silicate solid base component is heated to a temperature of from about 100-105°C (212-221°F) for the base to lose water molecules to form a glass-like structure with a remelt temperature above 810°C (1,490°F), depending on elevation, in order to liquefy the base before mixing with the admix; and the admix components can be heated to liquefy as specified by the choice of admix component. As described, the sodium silicate base is readily available from numerous companies include PQ Corporation. Other bases, independent or combined, can also be used like calcium lignosulfonate.

The amount of admix used will depend upon the solvent content of the base component itself and desired performance standards. In some embodiments where the base component itself is substantially free (i.e., less than about 1% by weight, and preferably about 0% by weight) of solvent (other than water), the water admix is added at a level of from about 10% to about 90%, preferably from about 50% to about 70%, based upon the total weight of the composition taken as 100% by weight. In some embodiments where the base component also comprises a water solvent (like distilled water or tap water) and the non-water and non-colorant admixes are also in dissolved water solution, the admix is added at a level of from about 0.0001% to about 27%, preferably from about 0.0005% to about 10% by volume, most preferably from about 0.001% to about 4.5% to total volume of base and water/solvent. The amount of colorant admix is based on the desired intensity and opacity. The solvent used with the admix can be water, or a salt-dissolving solvent (for a sodium base), such as polar protic solvents and polar aprotic solvents.

The total solids in the composition will typically be from about 20% to about 100% by weight, preferably from about 30% to about 80% by weight, or more preferably about 40% to about 70% by weight, based upon the total weight of the composition taken as 100% by weight and the application method, substrate absorption, and/or adsorption.

The mixed composition can be stored in an appropriate container sealed under vacuum, capped with a solid (e.g., wax or plastic), capped with an inert gas (e.g., nitrogen), or capped with ambient air. The composition will have a shelf life of at least about 180 days, preferably at least about 250 days, and more preferably at least about 365 days. The term "shelf life" refers to the length of shelf-storage stability of the composition when it can still be used to create the dry erase coatings.

In some embodiments and situations, water may be added after the opening of a finished product if a thinner product is required, when the seal has been breached, or when the finished product unit has been opened and the cap/lid was not replaced or correctly sealed.

In one embodiment, the inventive dry erase paint comprises an Si-containing compound, water, and an ingredient selected from the group consisting of binders (e.g., gum arabic), acids (e.g., mineral acids, H₂SO₄, HCl, and organic acids such as citric acid, acrylic acid, acetic acid), salts (e.g., NaCl, KCl), surfactants, and glycerin. Preferred Si-containing compounds are selected from the group consisting of silicates, Si-containing polymers, silanes, and mixtures thereof. Preferred silicates are selected from the group consisting of alkali metal silicates, alkali earth metal silicate, silicones, and mixtures thereof. The most preferred silicates are selected from the group consisting of sodium silicate, potassium silicate, lithium silicate, and mixtures thereof.

In a variation of this embodiment, the paint further comprises an ingredient selected from the group consisting of dyes (e.g., RIT brand dyes, traditional color additives as found in retail paint centers, food coloring), oils (e.g., coconut oil, vegetable oils such as olive oil), a silicone, a sugar (e.g., sucrose, fructose, glucose), an amino acid (e.g., glutamine, propylparaben, humectants/hygroscopic compounds (e.g., glycerin, sugar sorbitol, ethylene glycol), binders/glues (e.g., setting agents, glycolic acid, sodium acid pyrophosphate, calcium lignosulfonate), thickeners (e.g., gums, powder versions of added components), defoamers (e.g., aluminum, water), metal and mineral (e.g. calcium, magnesium, zinc), sources of metal ions (e.g., calcium ions, aluminum ions, magnesium ions), and mixtures thereof.

In preferred embodiments, the paint comprises water as its primary (and more preferably only) solvent. The water level in the paint would be at least about 30% by weight, preferably at least about 35% by weight, and more preferably from about 35% to about 55% by weight, based upon the weight of the paint taken as 100% by weight. Even more preferably, the paint comprises less than about 5% by weight, preferably less than about 2% by weight, preferably less than about 1% by weight, and preferably about 0% by weight of solvents other than water, again based upon the weight of the paint taken as 100% by weight.

It is preferred that the paint is also substantially free of epoxies, isocyanates, and/or photoinitiators. That is, the paint will comprise less than about 2% by weight, preferably less than 1% by weight, and more preferably about 0% by weight of each of these, based upon the weight of the paint taken as 100% by weight. Even more preferably, the total quantity of all three of these ingredients will meet the foregoing percentage limits. Furthermore, the pH of the solution can be lowered or raised, if desired, by the use of compatible pH adjusters. It is preferred that the surface can be resistant to the growth of bacteria and fungus.

It is also preferred that, due to environments that require the cleaning and removal of bacteria and fungi, the surface is resilient to cleaners that are commonly used like bleach. Bleach will etch and otherwise compromise existing dry erase surfaces either immediately compromising the ability for the surface to function, or with repeated use, compromise the ability of the surface to function. In other uses, the product can be added to existing paint formulations, or on top of treated and/or untreated surfaces, to receive some of the innovation benefits including the surface resistance to bacteria and/or fungus; and/or the ability of the surface to resilient to harsh chemicals.

In one embodiment, preferred quantities of the dry erase paint ingredients are as follows:

| INGREDIENT | BROADEST* | PREFERRED | MOST PREFERRED |
|---|---|---|---|
| Si-containing compound (ratio to Sodium) | 5-95 | 10-65 | 18.5-40.5 |
| Gum arabic | .0001-7** | .001-3.5 | 0.05-0.09 |
| Acid | 0.000001-15" | 0.00001-5 | 0.0001-1.5 |
| Sodium (to Si-) (ratio to Si above) | 0.01-90** | 2-70 | 9.5-30.5 |
| Surfactant | 0.00001-20** | 0.0001-5 | 0.002-0.1 |
| Glycerin | 0.0001-12** | 0.001-1 | 0.0111-0.03 |
| Dye | 0.000001-35** | 0.00001-15 | 0.0001-1.5 |
| Oil | 0.000001-15** | 0.00001-5 | 0.0001-1.5 |
| Silicone | 0.0001-100** | 0.0001-55 | 0.002-1 |
| Sugar | 0.0001-23** | 0.001-4 | 0.0111-0.03 |
| Amino acid | 0.000001-15** | 0.00001-5 | 0.0001-1.5 |
| Propylparaben | 0.000001-5** | 0.00001-3 | 0.0001-1.5 |
| Humectants | 0.00001-25** | 0.0001-5.8 | 0.002-3.7 |
| Binders | 0.00001-45** | 0.0004-15 | 0.0001-1.5 |
| Thickeners | 0.00001-35** | 0.00007-15 | 0.0001-1.5 |
| Defoamers | 0.000001-23" | 0.00001-12 | 0.0001-9 |

| | | | |
|---|---|---|---|
| *All numbers are % by weight, based upon the total weight of the paint taken as 100% by weight. **In embodiments where this ingredient is present. | | | |

In use, the composition is applied to a substrate surface. Suitable substrates include any surface to which a coating can be applied. The surface can be horizontal or vertical, and planar or non-planar. Exemplary surfaces include those selected from the group consisting of floors, walls, ceilings, desktops, boards, windows, acrylic glass (such as that sold under the name PLEXIGLASS®), wood products, metals, plastics, release liners, fabrics, paper, paints, finishes, existing dry erase boards, chalkboards and the like. Other designs like models may be more advantageous when a writable /erasable surface is applied to the surface allowing repeatable marking and removable of the markings. The substrate may be comprised of various materials, or may be coated with various materials including wood, dry wall, paper products, paint, plastic, plaster, clay, wax, melamine, existing dry erase surfaces, metal, wall board, sheetrock, gypsum board, cement, concrete, porcelain, ceramic, tile and the like.

Advantageously, most substrates do not need to be sanded or otherwise roughened, primed, or prepped before applying the coating composition, although the coating can also be applied to sanded, roughened, primed, or prepped surfaces. The composition can be applied using any suitable technique, including rolling, brushing, spraying, dipping, pouring, and the like. In some embodiments, the composition is applied at a rate of one (1) ounce to cover from about 3 square inches to about 6 square feet, preferably from about ½ square foot to about 5 square feet, and more preferably from about 1.5 square feet to about 3 square feet; to produce even coverage while maximizing product usage. The composition can be added in coats to equal the desired spread rate.

The viscosity of the coating can be varied to match the applied-to-surface and the applicator. Multiple coats can also be used to achieve the desired level of thickness. The number of coats required will depend upon the particular formulation used; the absorption, adsorption, porosity, and texture of the underlying surface; the level of evaporation in the environment, as well as the thickness of each coat applied. In some cases, if the evaporation is very quick on the top of the coating, yet slower on the bottom of the coating, a thinner coating may be used to eliminate undesirable coating imperfections during curing of the layer. Back-rolling, semi-dry, and dry back-brushing techniques can also be utilized. In such cases, subsequent coats may be needed to achieve the desired final thickness of the dry erase paint. If the solvent evaporation rate and underlying surface allows the product to cure without forming bubbles or surface variations, then a single coat can be applied. In addition, a defoamer compatible with the system can be added. In some aspects, it may be desirable to seal the substrate surface using a very thin coating of the dry erase composition followed by subsequent coats to form the dry erase coating. In any event, the final coating thickness will be sufficiently thick to keep markings from penetrating down into the substrate. Typically, this results in a final average thickness of from about 1 mil to about 25 mils, preferably from about 2 mils to about 5 mils, and more preferably from about 3 mils to about 4 mils.

The resulting film can be initially permanently applied to a substrate or applied to a temporary or carrier substrate that allows the resulting film to be peeled and removed and used by being applied at another time via an adhesive layer or as a non-adhered layer.

The viscosity of the composition is balanced so that it does not drip or sag when applied on a vertical surface, even with multiple coats, but also does not dry too quickly. In certain formulations, it can also be self-leveling and will fill slight imperfections in the substrate surface. The composition may have less curtaining attributes and/or contain inclusions that will create a varying degree of gloss-to-matte surface finishes.

The coating is then allowed to dry and cure without any special curing treatments or application of additional coatings (such as conditioners or the like). In other words, UV or heat curing is not necessary, and the coating is dried under ambient conditions (i.e., about 22°C +/-3°C and about 50% humidity +/- 10%). In addition, a top coat to the composition is not necessary to achieve the repeatedly markable and erasable surface. It will be appreciated that the cured coating is abrasion resistant, chemical resistant, and resistant to staining from permanent markers, inks, and/or paints, cleaners, and the like.

In the case of multiple coats, a surface that is dry in a shorter period of time (less than about 20 minutes) allows the installer to complete the multiple coats without waiting or returning to the job site. In some embodiments, the coatings will be ready to recoat or dry for a time period of from about 3 minutes to about 30 minutes, preferably from about 7 minutes to about 20 minutes, and more preferably from about 5 minutes to about 15 minutes before recoat.

Typically, the coating will be suitable for marking upon in less than about 72 hours of the last coating layer, preferably in less than about one (1) hour of the last coating layer, preferably in less than about 30 minutes, and more preferably in less than about 15 minutes. It will be appreciated that the cure time required to achieve the repeatedly markable and erasable property of the coating is for both dry erase markers and a permanent marker (such as that sold under the name Sharpie®). This aids in not having to reapply the dry erase surface if a permanent marker is immediately used. Additionally, the inventive coating will maintain its integrity for extended periods of time. For example, the coating will not exhibit visible cracking for at least about 180 days, preferably at least about 7300 days, and more preferably at least about 18250 days.

In some embodiments, it may be desirable to infuse a permanent image or marking (like a grid or logo) onto the coating. In this case, the substrate can receive the mark before application of a transparent or translucent composition product, and/or the coating can be marked upon during curing of a transparent to opaque composition.

In some embodiments, it may be desirable to have markings that require different removal processes. With the present invention, a marking on the cured surface by a permanent marker may be made requiring removal with a water-wet cloth, isopropyl alcohol, or other open market cleaners, and a marking by a dry erase marker being removed with an eraser. This allows a use like creating a grid to be repeatedly populated, and then the grid to be removed at a later time.

Some applications can be indoor or outdoor. Due to the anti-graffiti aspect of the product, the user may be desirous of applying to surfaces where removing graffiti is a consideration. Due to the fungus and bacteria resistance aspect of some embodiments, the user may apply to indoor and/or outdoor surfaces where growth resistance is desired. The composition can be sacrificial or non-sacrificial, depending upon the amount of product used and/or the removal method employed.

Some applications can also be to textiles. The compositions can be sacrificial or non-sacrificial, depending upon the textile cleaning method. In one composition, the product was removed from a textile receiving a typical residential clothes washing machine and a pre-wash treatment of Resolve® Spray 'N Wash®. Other applications can be made to wood (treated or non-treated), tile, stone, metal, plastic, paper products, ceramic, and other such substrates. The nature of the cleanable surface from markings, also cross-over to the removal of dirt, animal excrement, and other ecological substances. The nature of certain parts of the overall coating inhibits or stops the growth of bacteria, fungi, and other such growths on the surface; additional additives can also be added to achieve similar results.

The inventive coatings are repeatedly markable (i.e., they can be marked, removed, and marked again) with a variety of marking instruments, including dry erase markers, pens, crayons, permanent markers, crayons, highlighter markers, washable markers, regular markers, grease pens, ink pens, pencils, crayons, grease pens, cosmetics (e.g., lipstick, eye liner), spray paints, and the like; as well as adhesives such as tape, stickers, and the like. These markings are removable, and removing can be accomplished by dry or wet methods.

The terms "dry erase," "dry erasable," "markable-erasable," and the like, are used herein to refer to the coating's surface property of being markable or writeable with typical writing and marking utensils to create legible words, letter, images, and the like, with such writings and markings being removed from the coating surface without the use of solvents, cleaners, or other "wet" removal methods other than water (i.e., can be removed by wiping with a dry cloth, eraser, or the like).

The formed coatings are also resistant to various solvents and cleaners that may be used on the surface, including aqueous solutions including water, glass cleaner (Windex®), wall cleaner (Formula 409®), isopropyl alcohol, and other such chemicals and cleaners.

The surface will maintain its repeatedly markable and erasable attributes (or recover its attributes) while allowing the markings to be removed from the surface.

The inventive coatings also have the appropriate balance of softness, breathability, and flexibility versus hardness and non-porosity. In particular, the coatings are not so soft that an eraser or cleaning cloth drags on the surface, inhibiting a smooth or complete erasing experience; however, the coatings are also not too hard such that they crack or create a cracked image. The composition can be such that a desired cracked surface and/or rough surface may be made which allows clean erasing of a staining of the substrate.

The inventive coatings can be formulated as either glossy or with a flat sheen, depending upon the formulation. Sheen variances can also be achieved via the texture of the substrate or the texture of the application. Sheen variances can also be achieved post application by adding to the surface or altering the plane of the surface.

The invention can be utilized as an admix to other compositions to increase its ability to be cleanable and/or to share other attributes that are in the composition.

In some aspects, the inventive coatings are substantially transparent, which means that they have a % light transmittance of at least about 70%, preferably at least about 80%, and more preferably at least about 90% in the visible range (400-700 nm). Thus, the inventive coatings can be applied over existing painted surfaces to create repeatedly markable and erasable surfaces of virtually any color, or with images underneath, including, for example, colors, graph lines, logos, other graphics, and the like.

Alternatively, some embodiments of the product can be tinted/colored by pre-existing paint colorants that are typically found in paint centers where water-based paint tinting occurs. The product can also be easily tinted/colored by pre-existing dyes typically found in grocery stores and hobby sections. The level of opacity can be achieved by the opacity and amount of pigment/colorant added. This accommodates the desire to have a coating color that is different from the substrate color or one that is otherwise pre-manufactured. This allows a full palate of colors that are readily available at a paint center's tinting stations or at textile color sections. Tints/colors can be added during production, resulting in a product with color. In some embodiments, the product can be colored, and then re-colored later.

For a freshly-painted surface, the inventive coatings are advantageous because they have sufficient porosity to allow the underlying non-dry erase paint layer to off-gas through the dry erase layer so that it cures correctly and does not adversely affect the dry erase layer. However, as noted above, the porosity is balanced so that the dry erase layer provides a sufficient barrier between the substrate and the surface to avoid permanent marking of the substrate. For some surfaces, it is advantageous for the inventive coating to permeate the surface to resist pealing and increase permanence. In some applications, the inventive coating may seal the underlying surface(s), thereby not allowing off-gassing or other modifications to occur to the underlying surface(s).

The inventive coatings are suitable for indoor and outdoor use, and are resistant to the elements such as rain, snow, sun, and the like. In some embodiments, UV inhibitors can be included in the compositions to reduce yellowing of the coating from sun exposure if desired/needed, when components of the composition are UV sensitive.

Additional advantages of the various embodiments of the disclosure will be apparent to those skilled in the art upon review of the disclosure herein and the working examples below. It will be appreciated that the various embodiments described herein are not necessarily mutually exclusive unless otherwise indicated herein. For example, a feature described or depicted in one embodiment may also be included in other embodiments, but is not necessarily included. Thus, the present invention encompasses a variety of combinations and/or integrations of the specific embodiments described herein.

As used herein, the phrase "and/or," when used in a list of two or more items, means that any one of the listed items can be employed by itself or any combination of two or more of the listed items can be employed. For example, if a composition is described as containing or excluding components A, B, and/or C, the composition can contain or exclude A alone; B alone; C alone; A and B in combination; A and C in combination; B and C in combination; or A, B, and C in combination.

The present description also uses numerical ranges to quantify certain parameters relating to various embodiments of the invention. It should be understood that when numerical ranges are provided, such ranges are to be construed as providing literal support for claim limitations that only recite the lower value of the range as well as claim limitations that only recite the upper value of the range. For example, a disclosed numerical range of about 10 to about 100 provides literal support for a claim reciting "greater than about 10" (with no upper bounds) and a claim reciting "less than about 100" (with no lower bounds).

### EXAMPLES

The following examples set forth methods in accordance with the invention. It is to be understood, however, that these examples are provided by way of illustration and nothing therein should be taken as a limitation upon the overall scope of the invention.

### EXAMPLE 1

### Preparation of Dry Erase Paint Compositions

### i. Formulation 1

A dry erase paint composition was formulated by mixing 37.5% by weight sodium silicate (Na₂O₃Si) CAS No. 1344-09-8, with 62.5% water (H₂O) by weight CAS No. 7732-18-5 to form an aqueous silicate solution (Sodium Silicate - N-Clear by PQ Corporation). Next, 0.11% by weight of acrylic acid CAS No. 79-10-7 Part no. 147230 (contains 200 ppm MEHQ as inhibitor) was mixed with the aqueous salt solution. The resulting salt solution was mixed with the aqueous silicate solution to form the dry erase paint composition. Each mixing step was carried out under ambient conditions and for sufficient time to substantially dissolve all solids within the particular solution or dispersion. When the two solutions were combined, mixing took place under ambient conditions and until the solutions were substantially uniformly combined.

### ii. Formulation II

A dry erase paint composition was formulated as described above with respect to Formulation I of sodium silicate where 0.278% by weight of acrylic acid, 5.556% by weight of glycerin, and 0.292% by weight of Dawn (original Ultra Concentration) was also added to the aqueous salt solution.

### iii. Formulation III

A dry erase paint composition was formulated as described above with respect to Formulation I except that 12.5% by volume (based on the volume of the aqueous salt solution) of Magnesium Chloride (Eison Ionic Minerals -Dietary Supplement, 2.0% in solution with Deionized water) was added to the aqueous salt solution.

### EXAMPLE 2

### Formation of Dry Erase Coating

The dry erase paint compositions formed in Example 1 were formed into coatings on a substrate surface. Specifically, each sample was applied via a sponge brush to a latex painted (Behr) vertical position substrate surface as well as an uncoated horizontal position card stock (obtained from Leneta Corp.). The applied samples were allowed to air dry for 15 minutes (or more) under ambient conditions (∼25°C).

The dried surfaces were tested for dry erasability using conventional dry erase markers. The surfaces were then tested with other marking instruments, including permanent markers, spray paint, crayons, and regular markers. Additionally, the inventive coatings were tested for dry erasability using a conventional felt dry eraser. The surfaces were then tested with solvents like water, isopropyl alcohol (70% solution), and Windex® brand cleaner. Each of the markings could be easily wiped from the surface of the dry erase paint coating. None of the solvents affected the performance of either subsequent writing or erasability. The foregoing was also tested with multiple coatings of the inventive dry erase composition so as to confirm that the product would adhere to itself.

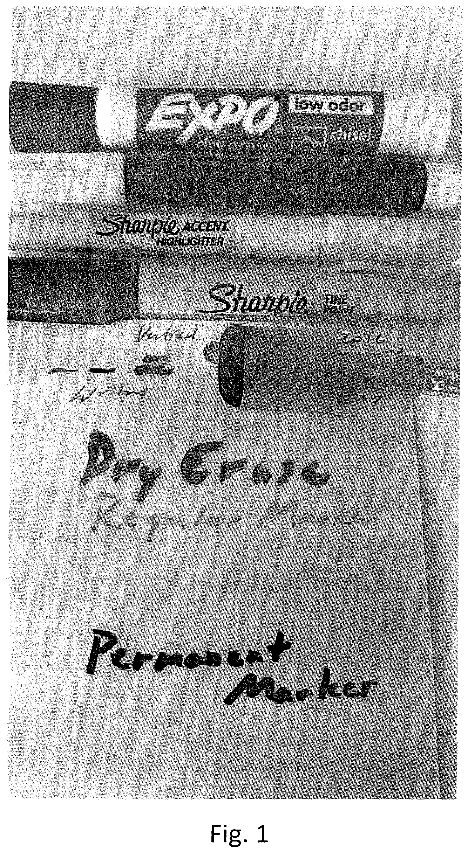

The foregoing performance testing of dry erase paint composition Formulation I as shown in Figs. 1-6. Specifically, before the Formulation I composition was used to form a dry erase coating on the paperboard card stock substrate, the word "Writing" (ink pen) and three color marks (left to right they were blue, black, red, corresponding to the instruments described below) were drawn in the upper left-hand corner (Fig 1.). This was to test the durability of writing that was to be maintained under the coating, and also to show that visibility of markings under the coating is achieved (i.e., the coating is sufficiently transparent). A dry erase coating was then formed from Formulation I as described above, covering most of the substrate surface, including the word "Writing" and the three color marks.

After the coating was formed, various marking devices were tested on top of that coating. Still referring to Fig. 1, "Dry Erase" was written with the red Expo® dry erase marker shown at the top of the figure. "Regular Marker" was written with the conventional blue marker shown below the Expo® dry erase marker. "Highlighter" was written with the yellow Sharpie® Accent Highlighter shown third in the figure. Finally, "Permanent Marker" was written with the black Sharpie® Fine Point marker shown at the bottom of the figure.

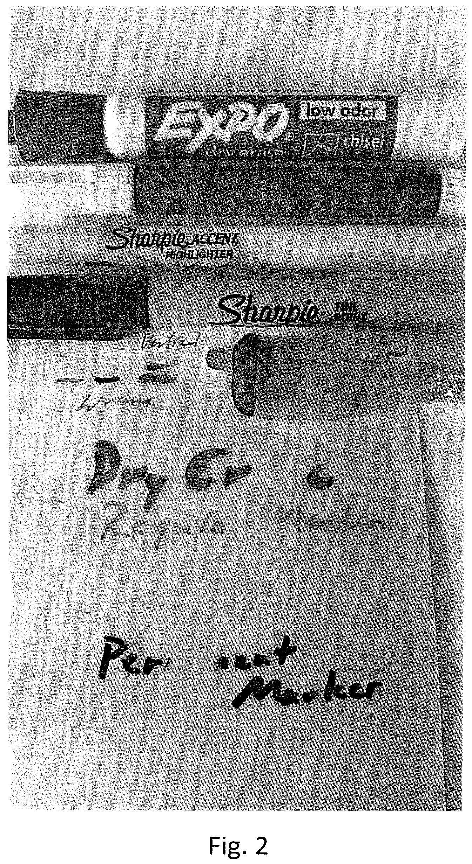

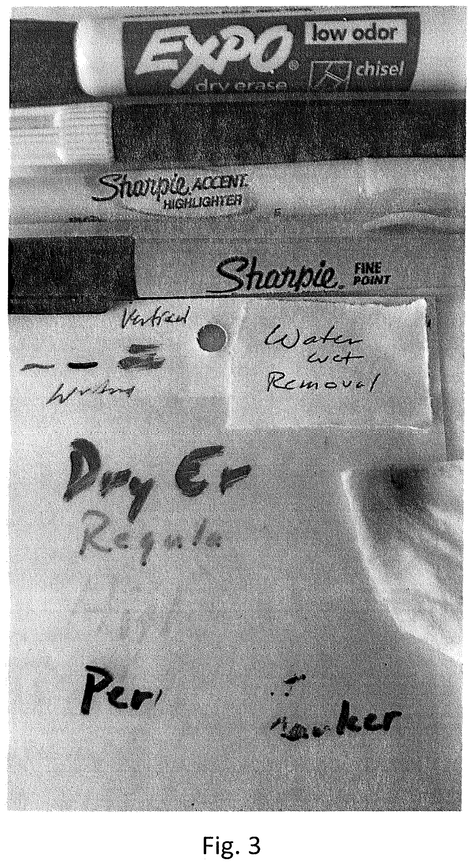

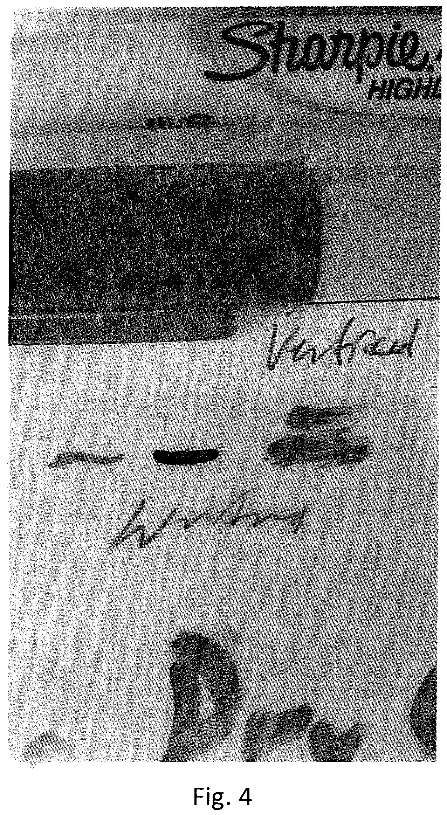

A felt eraser was then used to erase a section of the words on top of the coating, which was done successfully (Fig. 2). At the same time, the markings under the coating remained undisturbed even when an attempt was made to erase them. Next, a wet (with water) paper towel was used to remove a section to the right of the previously-erased section (Fig. 3). The markings under the coating were not able to be removed by the wet paper towel. Fig 4. is a close-up view of the markings under the coating, further showing the integrity of these markings as well as the substantial transparency of the coating. The boundaries of the coating are also visible in this figure due to the addition of a minimal amount of dye.

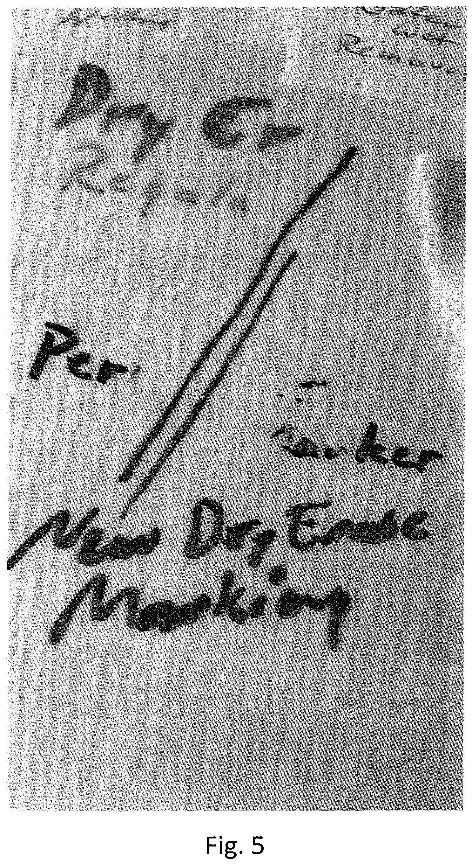

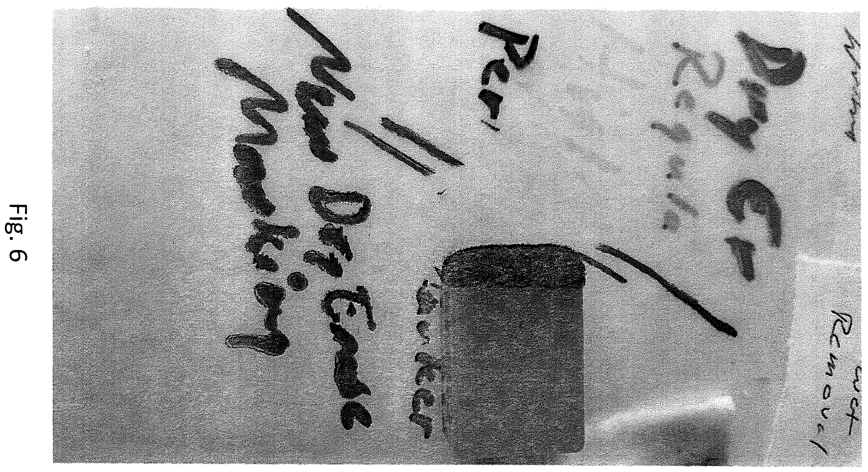

Referring to Fig. 5, the sample as last shown in Fig. 3 was then written on with a new dry erase marker (black this time) to show that the erased area is re-markable. Finally, Fig. 6, confirms that the new markings can then be erased again, using the felt eraser. The foregoing demonstrates the ability of the inventive coating compositions to function well as a dry erase coating.

### EXAMPLE 3

### Formulation Variations

The following formulations were also created and tested using one or more methods as described above, and they were also found to have similar performance.
a. In one embodiment, 0.2083% by volume of acrylic acid added to a sodium silicate and water solution of 3.22 weight ratio (52.5% water by weight) kept the surface and performance intact.
b. In another embodiment, 0.0694% by volume of acrylic acid still kept the surface and performance intact. Acids can also be introduced through other solutions that contain acid, like adding acrylic paint which contains acrylic acid to the sodium silicate.
c. In one embodiment, vinegar was added to the sodium silicate and water solution (3.22 weight ratio) with acrylic paint 12:1:1 (silicone/water solution, vinegar, acrylic paint) by volume.
d. In other embodiments, raw glycerin and Dawn® dish soap, both independent and together, were added to the sodium silicate solution.
e. In the following embodiments, a solution of gum arabic powder, raw glycerin, and water was mixed to produce a binder, which was then added to a sodium silicate and water solution. The powder created a more matte finish when introduced as a higher concentration in the total solution. Those formulations are as follows:
   i. 1T (tablespoon) gum arabic powder
      1t (teaspoon) raw glycerin
      ¼t water
      3T sodium silicate and water solution
   ii. 1/2T gum arabic powder
      1/2t raw glycerin
      1/8t water
      3.5T sodium silicate and water solution
   iii. 1/4T gum arabic powder
      1/4t raw glycerin
      1/16t water
      1.75T sodium silicate and water solution
      2 drops acrylic acid (approx. 48 drops in 1t)
   iv. 1/4T gum arabic powder
      1/4t raw glycerin
      1/16t water
      2.75T sodium silicate and water solution
      2 drops acrylic acid
   v. 1/4T gum arabic powder
      1/4t raw glycerin
      1/16t water
      2.75T sodium silicate and water solution
      2 drops acrylic acid
      1/4t raw glycerin
      1/8t Dawn® dish soap
f. As a further variation, metal ions can also be used in the solution to help the chemical reaction. These additives can be in powder form or in liquid form. Examples of common metal ions that are reactive with the silicate include ions of calcium, magnesium, zinc, copper, and iron. These ions can be provided through various sources of the particular metal (e.g., calcium chloride). Examples of some of these formulations are as follows:
   i. 1t sodium silicate solution, 1/4t of calcium (in liquid form: Sprouts label);
   ii. 1t sodium silicate solution, 1/4t of magnesium (in liquid form: Sprouts label);
   iii. 1t sodium silicate solution, 1/4t of calcium (in liquid form: Sprouts label), 1 drop raw glycerin;
   iv. 1t sodium silicate solution, 1/4t of magnesium (in liquid form: Sprouts label), 1 drop raw glycerin;
   v. 1t sodium silicate solution, 1/4t of calcium (in liquid form: Sprouts label), 1 drop raw glycerin, 1 drop Acrylic acid;
   vi. 1t sodium silicate solution, 1/4t of magnesium (in liquid form: Sprouts label), 1 drop raw glycerin, 1 drop Acrylic acid;
   vii. 2t sodium silicate solution, 1/4t of calcium, 1/4t of magnesium, 2 drops Acrylic acid, 2 drops raw glycerin;
   viii. 2t sodium silicate solution, 1/4t of calcium, 1/4t of magnesium, 2 drops Acrylic acid, 2 drops raw glycerin, 4 drops of Dawn.

Finally, there are a number of compatible additives that retain moisture, which assists in keeping the silicate from cracking. Such additives include those selected from the group consisting of humectants, compounds having hydroxyl groups, acids, surfactants, and other water-soluble and/or hygroscopic substances.

The invention pertains in particular to the subject-matter in the following clauses, without being limited thereto or thereby. The embodiments presented in the following clauses can be combined as indicated, and can also be combined with other matter in the present description, and with the claims at the end of this document.
1. A method of producing a dry erasable surface, said method comprising:
   providing a one-pot, dry erase paint comprising an Si-containing compound, water, and an ingredient selected from the group consisting of binders, acids, salts, surfactants, and glycerin;
   providing a substrate having a surface;
   forming a coating of said paint mixture adjacent said substrate surface; and
   allowing said coating to dry under ambient conditions, wherein said coating has a surface, said coating surface being markable-erasable.
2. The method of embodiment 1, wherein said Si-containing compound is selected from the group consisting of silicates, Si-containing polymers, silanes, and mixtures thereof
3. The method of embodiment 2, wherein said silicate is selected from the group consisting of alkali metal silicates, alkali earth metal silicate, silicones, and mixtures thereof.
4. The method of embodiment 3, wherein said silicate is selected from the group consisting of sodium silicate, potassium silicate, lithium silicate, and mixtures thereof
5. The method of any of embodiments 1 to 4, wherein said paint has an overall water level of at least about 30% by weight, based upon the total weight of the paint taken as 100% by weight.
6. The method of any of embodiments 1 to 5, said paint comprising less than about 5% by weight of solvents other than water.
7. The method of any of embodiments 1 to 6, wherein said paint further comprises an ingredient selected from the group consisting of dyes, oils, silicones, sugars, amino acids, propylparaben, glycerin, sorbitol, glycols, calcium lignosulfonate, humectants, hygroscopes, moisture retainers, plasticizers, olefins, phosphates, glucosides, asphaltenes, esters, plasticizers, olefins, phosphates, glucosides, asphaltenes, and mixtures thereof.
8. The method of any of embodiments 1 to 7, wherein said substrate is selected from the group consisting of wood, acrylic glass, paper products, release liners, textiles, clay, Plaster of Paris, dry wall, painted surfaces, plastic, glass, melamine coatings, metal, slate, porcelain, concrete, cement, stone, brick, tile, ceramic, enameled surfaces, existing dry erase surfaces, and composite.
9. The method of any of embodiments 1 to 8, wherein said dry erase paint is substantially free of epoxies, isocyanates, and/or photoinitiators.
10. The method of any of embodiments 1 to 9, wherein said coating is markable-erasable less than about 20 hours after said forming.
11. The method of any of embodiments 1 to 10, wherein said coating is substantially transparent.
12. The method of any of embodiments 1 to 11, wherein said coating is markable with dry erase markers and pens, permanent markers, crayons, highlighter markers, washable markers, regular markers, glues, spray paints, make-up, pencils, grease pencils, grease pens, finger paints, pens, cosmetics, adhesives, and erasable by water and/or a dry eraser.
13. A dry erasable structure comprising:
   a substrate having a surface; and
   a dry erasable coating adjacent the substrate surface, said dry erasable coating being formed from a dry erase paint comprising an Si-containing compound, water, and an ingredient selected from the group consisting of binders, acids, salts, surfactants, and glycerin.
14. The structure of embodiment 13, wherein dry erase markers and pens, permanent markers, crayons, highlighter markers, washable markers, regular markers, glues, spray paints, make-up, pencils, grease pencils, grease pens, finger paints, and adhesives are removable from said dry erasable coating by water and/or a dry eraser.
15. The structure of embodiment 13 or 14, wherein said substrate surface is painted, said painted surface having a color.
16. The structure of any of embodiments 13 to 15, wherein said dry erasable coating is substantially transparent, wherein said color is visible underneath said dry erasable coating.
17. A one-pot, dry erase paint comprising an Si-containing compound, water, and an ingredient selected from the group consisting of binders, acids, salts, surfactants, and glycerin, wherein said paint has a one-pot shelf-life of at least about 180 days.
18. The one-pot, dry erase paint of embodiment 17, wherein said paint is substantially free of epoxies, isocyanates, photoinitiators, and/or solvents other than water.
19. The one-pot, dry erase paint of embodiment 17 or 18, wherein:
   said Si-containing compound is selected from the group consisting of alkali metal silicates, alkali earth metal silicate, silicones, silanes, and mixtures thereof;
   said paint is substantially free of epoxies, isocyanates, photoinitiators, and/or solvents other than water; and
   said paint has an overall water level of at least about 30% by weight, based upon the total weight of the paint taken as 100% by weight.
20. The one-pot, dry erase paint of any of embodiments 17 to 19, wherein said paint further comprises an ingredient selected from the group consisting of dyes, oils, a silicone, a sugar, an amino acid, propylparaben, and mixtures thereof.

## Claims

1. A method of producing a dry erasable surface, said method comprising:
providing a one-pot, dry erase paint comprising an Si-containing compound, water, and an ingredient selected from the group consisting of binders, acids, salts, surfactants, and glycerin;
providing a substrate having a surface;
forming a coating of said paint mixture adjacent said substrate surface; and
allowing said coating to dry under ambient conditions, wherein said coating has a surface, said coating surface being markable-erasable.

2. The method of claim 1, wherein said Si-containing compound is selected from the group consisting of silicates, Si-containing polymers, silanes, and mixtures thereof.

3. The method of claim 1 or 2, wherein said paint has an overall water level of at least about 30% by weight, based upon the total weight of the paint taken as 100% by weight.

4. The method of any of claims 1 to 3, said paint comprising less than about 5% by weight of solvents other than water.

5. The method of any of claims 1 to 4, wherein said substrate is selected from the group consisting of wood, acrylic glass, paper products, release liners, textiles, clay, Plaster of Paris, dry wall, painted surfaces, plastic, glass, melamine coatings, metal, slate, porcelain, concrete, cement, stone, brick, tile, ceramic, enameled surfaces, existing dry erase surfaces, and composite.

6. The method of any of claims 1 to 5, wherein said coating is markable-erasable less than about 20 hours after said forming.

7. The method of any of claims 1 to 6, wherein said coating is substantially transparent.

8. The method of any of claims 1 to 7, wherein said coating is markable with dry erase markers and pens, permanent markers, crayons, highlighter markers, washable markers, regular markers, glues, spray paints, make-up, pencils, grease pencils, grease pens, finger paints, pens, cosmetics, adhesives, and erasable by water and/or a dry eraser.

9. A dry erasable structure comprising:
a substrate having a surface; and
a dry erasable coating adjacent the substrate surface, said dry erasable coating being formed from a dry erase paint comprising an Si-containing compound, water, and an ingredient selected from the group consisting of binders, acids, salts, surfactants, and glycerin.

10. The structure of claim 9, wherein dry erase markers and pens, permanent markers, crayons, highlighter markers, washable markers, regular markers, glues, spray paints, make-up, pencils, grease pencils, grease pens, finger paints, and adhesives are removable from said dry erasable coating by water and/or a dry eraser.

11. The structure of claim 9 or 10, wherein said substrate surface is painted, said painted surface having a color.

12. The structure of any of claims 9 to 11, wherein said dry erasable coating is substantially transparent, wherein said color is visible underneath said dry erasable coating.

13. A one-pot, dry erase paint comprising an Si-containing compound, water, and an ingredient selected from the group consisting of binders, acids, salts, surfactants, and glycerin, wherein said paint has a one-pot shelf-life of at least about 180 days.

14. The one-pot, dry erase paint of claim 13, wherein said paint is substantially free of epoxies, isocyanates, photo initiators, and/or solvents other than water.

15. The one-pot, dry erase paint of claim 13 or 14, wherein:
said Si-containing compound is selected from the group consisting of alkali metal silicates, alkali earth metal silicate, silicones, silanes, and mixtures thereof;
said paint is substantially free of epoxies, isocyanates, photoinitiators, and/or solvents other than water; and
said paint has an overall water level of at least about 30% by weight, based upon the total weight of the paint taken as 100% by weight.
